Europäisches Patentamt

European Patent Office

Office européen des brevets

(11) Veröffentlichungsnummer: **0 167 744**
**A1**

(12) # EUROPÄISCHE PATENTANMELDUNG

(21) Anmeldenummer: **85105611.9**

(22) Anmeldetag: **08.05.85**

(51) Int. Cl.⁴: **G 01 K 1/14**
**G 01 K 1/16**

(30) Priorität: **18.05.84 DE 3418451**

(43) Veröffentlichungstag der Anmeldung:
**15.01.86 Patentblatt 86/3**

(84) Benannte Vertragsstaaten:
**AT CH DE FR GB IT LI NL**

(71) Anmelder: **Degussa Aktiengesellschaft**
**Weissfrauenstrasse 9**
**D-6000 Frankfurt am Main 1(DE)**

(71) Anmelder: **Braunschweiger Hüttenwerk GmbH**
**Alte Leipziger Strasse 117-118**
**D-3300 Braunschweig(DE)**

(72) Erfinder: **Schwarz, Fritz**
**Im Eilenbügel 38**
**D-6456 Langenselbold(DE)**

(72) Erfinder: **Grosskurth, Hans**
**Tulpenweg 19**
**D-6229 Walluf 1(DE)**

(54) Verfahren zur Temperaturmessung auf der Gleitfläche von Gleitlagern.

(57) Es wird ein Verfahren zur Temperaturmessung auf der Gleitfläche von Gleitlagern beschrieben, mit dem Temperaturerhöhungen im Lager, die auf einen beginnenden Lagerschaden hindeuten, rasch und zuverlässig erkannt werden können. Dazu werden Bohrungen im Gleitlagerstützkörper mit Stiften aus gut wärmeleitendem Material ausgefüllt und die Temperatur auf dem Kopf des Stiftes gemessen.

EP 0 167 744 A1

Degussa Aktiengesellschaft

Weissfrauenstrasse 9, 6000 Frankfurt am Main

und

Braunschweiger Hüttenwerk GmbH

Alte Leipzigerstr. 117 - 118, 3300 Braunschweig

**Verfahren zur Temperaturmessung auf der Gleitfläche von Gleitlagern**

Die Erfindung betrifft ein Verfahren zur Temperaturmessung auf der Gleitfläche von Gleitlagern mit Hilfe von durchgehenden Bohrungen im Gleitlagerstützkörper und Temperaturfühlern.

Gleitlager gehören zu den wichtigsten Maschinenelementen und finden sich beispielsweise in Motoren, Kompressoren, Pumpen und Getrieben. Sie haben die Aufgabe, bei gegeneinander bewegten Teilen Kräfte aufzunehmen und die Führung der Maschinenteile zu gewährleisten.

Gewöhnlich bewegt sich ein zylindrischer Körper (Welle, Achse, Zapfen) in einem Hohlzylinder, doch gibt es auch ebene und gewölbte Gleitlager. Die gegeneinander arbeitenden Gleitflächen bzw. -schichten stellt man im allgemeinen aus verschiedenen Werkstoffen her, wobei für die Gleitfläche des Lagers ein Werkstoff mit besonderen Gleiteigenschaften benötigt wird. Diese Gleitschicht ist normalerweise nur dünnwandig auf einen massiven Stützkörper aufgebracht, wofür mehrere Verfahren zur Verfügung stehen, wie Angießen, Aufplattieren oder elektrolytischer Auftrag. Der letzte Bearbeitungsschritt ist meist spanabhebend (z.B. Schleifen, Polieren, Läppen).

Die Gleitfläche bzw. Gleitschicht des Lagers muß auch den Verschleiß durch Abrieb aufnehmen. Durch diesen Verschleiß können Schäden am Lager auftreten, die zur Zerstörung der Gleitlager und der darin sich bewegenden Körper und damit zu erheblichen Reparaturkosten führen können.

Man ist daher bestrebt, solche Lagerschäden möglichst frühzeitig zu erkennen und zu beheben, bevor es zu größeren Zerstörungen kommt. Eine wichtige Kenngröße bei der Entstehung von Lagerschäden ist die Temperaturerhöhung auf der Gleitfläche bzw. in der Gleitschicht des Lagers. Eine Temperaturmessung in den Gleitlagern ist daher vielfach die einfachste Methode, um die betriebssichere Funktion eines Gleitlagers kontinuierlich und zuverlässig zu überwachen und plötzlich auftretende Funktionsstörungen rechtzeitig vor dem Eintritt ernsthafter Schäden zu erkennen.

Es ist bekannt, von außen durchgehende Bohrungen in die Gleitlager einzubringen und die Temperatur der Gleitschicht mit Hilfe von elektrischen Thermometern zu messen. Dazu baut man entweder herkömmliche Thermoelemente in Bohrungen mit sehr kleinem Durchmesser ein, oder man stellt die Thermoelemente selbst massiv aus einem Werkstoff her, der möglichst die gleiche Temperatur- und Wärmeleitzahl wie der Lagerwerkstoff besitzt, und füllt damit die Bohrung vollständig aus (messen + prüfen/automatik, Juli/August 1979, Seiten 567 bis 573). Diese Meßverfahren haben aber den Nachteil, daß bei einem notwendigen Austausch der Gleitlager auch ein Austausch des Temperaturfühlers und damit umfangreiche Installationsarbeiten erforderlich werden oder der relativ teure Temperaturfühler mit zum Schrott wandert.

Außerdem ist es bekannt, die Temperatur der Außenfläche des Gleitlagers mit einem auf die Außenfläche aufgesetzten Thermometer zu messen, um aus dieser Oberflächentemperatur Rückschlüsse auf die Temperatur der Gleitschicht zu ziehen. Dieses Verfahren hat aber den Nachteil, daß eine nicht repräsentative Temperatur erfasst wird und insbesondere plötzlich auftretende Schäden nicht zuverlässig und genügend schnell erkannt werden können.

Es war daher Aufgabe der vorliegenden Erfindung, ein Verfahren zur Temperaturmessung auf der Gleitfläche von Gleitlagern mit Hilfe von durchgehenden Bohrungen im Gleitlagerstützkörper und Temperaturfühlern zu finden, bei dem auch Temperaturerhöhungen durch plötzlich auftretende Lagerschäden zuverlässig und rechtzeitig erkannt werden können, ohne daß bei einem notwendigen Austausch des Gleitlagers umfangreiche Installationsarbeiten erforderlich sind oder der Verlust eines eingebauten Temperaturfühlers in Kauf genommen werden muß.

Diese Aufgabe wurde erfindungsgemäß dadurch gelöst, daß in die Bohrungen jeweils ein den Abmessungen der Bohrung angepasster Stift aus einem gut wärmeleitenden Material eingebracht wird, anschließend die Gleitschicht auf den Gleitlagerstützkörper und der einen Seite der Stifte aufgebracht wird und die Temperaturfühler auf die zur Lageraußenseite hinweisende Seite der Stifte aufgesetzt werden.

Als gut wärmeleitendes Material verwendet man bevorzugt Silber und Kupfer.
Im allgemeinen genügt bei kleinen Lagern eine Bohrung bzw. Meßstelle.

Vorteilhafterweise benutzt man zum Ausfüllen der Bohrungen nietförmige Stifte aus Kupfer und Silber, wobei der verdickte Nietkopf nach der Außenseite des Lagers hin ausgerichtet wird, um den Temperaturfühler eine größere Auflagefläche zu bieten.

Besonders bewährt hat es sich, die Stifte nur im unmittelbaren Bereich der Gleitschicht wärmeschlüssig mit dem Gleitlagerstützkörper zu verbinden und den übrigen Bereich thermisch zu isolieren. Dadurch findet ein Wärmeübergang nur von der Gleitschicht her statt, sodaß die Temperaturanzeige am Kopf des Stiftes sehr exakt die Temperatur der Gleitschicht wiedergibt und insbesondere Temperaturänderungen besonders rasch festgestellt werden können, die auf beginnende Lagerschäden hindeuten.

Aus Fertigungsgründen ist es oft von Vorteil, die Stifte jeweils in einen zylindrischen Formkörper einzubetten, dessen Abmessungen denen der Bohrung entsprechen und der aus dem gleichen Material wie der Gleitlagerstützkörper besteht. Nach dem wärmeschlüssigen Einbringen des Formkörpers in die Bohrung wird die Gleitschicht aufgebracht.

Zur Temperaturmessung verwendet man vorzugsweise Thermoelemente oder elektrische Widerstandsthermometer.

Mit dem erfindungsgemäßen Verfahren ist es möglich, Temperaturerhöhungen in der Gleitschicht, die auf beginnende Lagerschäden hindeuten, zuverlässig und rechtzeitig zu erkennen. Beim notwendigen Austausch des Gleitlagers kann der Temperaturfühler ohne großen Aufwand entfernt und wiederverwendet werden.

Folgendes Beispiel soll das erfindungsgemäße Temperaturmeßverfahren näher erläutern:

Ein Gleitlagerstützkörper aus Bronze mit 20 mm Stärke ist mit einer durchgehenden Bohrung von 5 mm Durchmesser versehen. In diese Bohrung wird ein 20 mm langer, 5 mm starker zylindrischer Formkörper ebenfalls aus Bronze eingepasst, sodaß er mit dem Gleitlagerstützkörper verbunden ist. In den Formkörper ist ein Silberniet eingebettet mit einer Schaftlänge von 20 mm, einem Schaftdurchmesser von 2 mm und einem Kopfdurchmesser von 4 mm. Der Schaft ist im Bereich der Gleitschicht lediglich auf eine Länge von 2 mm in den Formkörper eingelötet, die übrige Schaftlänge und der Nietkopf ist durch Ausgießen mit einer wärmeisolierenden Masse vom Formkörper thermisch isoliert. Die Gleitschicht wird erst nach Einpassung des Formkörpers auf den Gleitlagerstützkörper aufgebracht und wird daher von der Bohrung nicht unterbrochen. Mit einem Thermoelement, das auf den Nietkopf aufgesetzt wird, lassen sich innerhalb weniger Sekunden Temperaturänderungen in der Gleitschicht feststellen.

Degussa Aktiengesellschaft

Weissfrauenstrasse 9, 6000 Frankfurt am Main

und

Braunschweiger Hüttenwerk GmbH

Alte Leipzigerstr. 117 - 118, 3300 Braunschweig

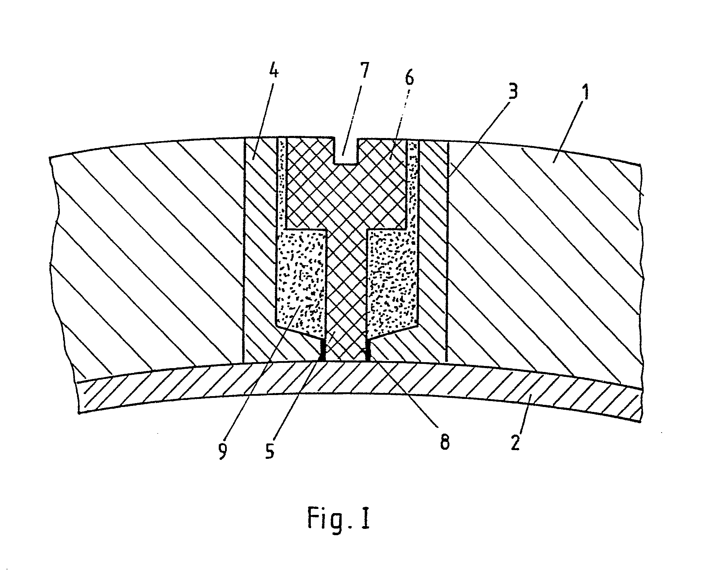

Patentansprüche:

1. Verfahren zur Temperaturmessung auf der Gleitfläche von Gleitlagern mit Hilfe von durchgehenden Bohrungen im Gleitlagerstützkörper und Temperaturfühlern, dadurch gekennzeichnet, daß in die Bohrungen jeweils ein den Abmessungen der Bohrung angepasster Stift aus einem gut wärmeleitenden Material eingebracht wird, anschliessend die Gleitschicht auf dem Gleitlagerstützkörper und der einen Seite der Stifte aufgebracht wird und die Temperaturfühler auf die zur Lageraußenseite hinweisenden Seite der Stifte aufgesetzt werden.

2. Verfahren zur Temperaturmessung nach Anspruch 1, dadurch gekennzeichnet, daß in die Bohrungen nietförmige Stifte eingebracht werden, deren verdickter Kopf nach der Lageraußenseite hin angeordnet wird.

3. Verfahren zur Temperaturmessung nach Anspruch 1 oder 2, dadurch gekennzeichnet, daß die Stifte nur im unmittelbaren Bereich der Gleitschicht wärmeschlüssig mit dem Gleitlagerstützkörper verbunden und im übrigen Bereich von diesem thermisch isoliert werden.

0167744

4. Verfahren zur Temperaturmessung nach Anspruch 1 bis 3,

   dadurch gekennzeichnet,

   daß die Stifte jeweils in einen zylindrischen, den Abmessungen der Bohrungen entsprechenden Formkörper eingebettet werden und diese Formkörper vor dem Aufbringen der Gleitschicht wärmeschlüssig in dem Gleitlagerstützkörper eingebracht werden.

5. Verfahren zur Temperaturmessung nach Anspruch 1 bis 4,

   dadurch gekennzeichnet,

   daß als Temperaturfühler Thermoelemente oder elektrische Widerstandsthermometer verwendet werden.

Fig. I

Europäisches
Patentamt

EUROPÄISCHER RECHERCHENBERICHT

0167744
Nummer der Anmeldung

EP 85 10 5611

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | FR-A-1 437 205 (COMPAGNIE ELECTRO- MECANIQUE) * Figuren 1,3; Seite 1, linke Spalte, Zeilen 7-25; Seite 1, linke Spalte, Zeile 41 - Seite 2, linke Spalte, Zeile 13 * | 1 | G 01 K 1/14 G 01 K 1/16 |
| | --- | | |
| A | DE-C- 968 084 (ALLMÄNNA SVENSKA ELEKTRISKA AKTIEBOLAGET) * Figur 1; Seite 2, Zeile 14 - Zeile 79 * | 1,3 | |
| | --- | | |
| A | NAVY TECHNICAL DISCLOSURE BULLETIN, Band 4, Nr. 10, Oktober 1979, Seiten 51-58, Washington, US; H. ERAKAT: "Temperature sensors" * Seite 53, Figur 6; Seite 57, Zeile 23 - Seite 58, Zeile 6 * | 2 | |
| | --- | | RECHERCHIERTE SACHGEBIETE (Int Cl 4) |
| A | DE-A-1 473 298 (METRAWATT AG) * Figur 1; Seite 1, Zeile 17 - Seite 3, Zeile 21 * | 3,5 | G 01 K 1/00 G 01 K 7/00 G 01 K 13/00 |
| | ---         -/- | | |

Der vorliegende Recherchenbericht wurde für alle Patentansprüche erstellt

| Recherchenort DEN HAAG | Abschlußdatum der Recherche 14-08-1985 | Prüfer DRYSDALE N. |
|---|---|---|

Europäisches
Patentamt

EUROPÄISCHER RECHERCHENBERICHT

0167744
Nummer der Anmeldung

EP 85 10 5611

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| D,A | MESSEN + PRÜFEN/AUTOMATIK, Juli/August 1979, Seiten 567-573, Bad Wörishofen, DE; J. FRICKE et al.: "Messungen an geschmierten Gleitflächen, Teil 5: Temperaturmessungen" * Seiten 567-569, Absatz 17.1, "Anwendungsbeispiele - stationäre Temperaturmessungen", insgesamt * ----- | 1 | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 14-08-1985 | DRYSDALE N. |